# EUROPEAN PATENT SPECIFICATION

(11) **EP 3 410 647 B1**
(45) Date of publication and mention of the grant of the patent: **15.01.2020**
(21) Application number: 17173788.5
(22) Date of filing: 31.05.2017
(51) Int. Cl.: H04L 12/46

(54) **DATA EXCHANGE SYSTEM, METHOD AND GATEWAY MODULE**
DATENAUSTAUSCHSYSTEM, VERFAHREN UND GATEWAY-MODUL
SYSTÈME D'ÉCHANGE DE DONNÉES, MÉTHODE ET PASSERELLE

(43) Date of publication of application: 05.12.2018
(73) Proprietor: Nokia Solutions and Networks Oy, 02610 Espoo (FI)
(72) Inventor: LIEKENS, Werner Mario, 2018 Antwerp (BE); PEREZ CAPARROS, David, 2018 Antwerp (BE)
(74) Representative: Novagraaf Technologies

(56) References cited:
- US-A1- 2006 202 816
- US-A1- 2016 359 864
- US-B1- 8 653 965
- HUO CHENGJIA ET AL: "Middleware for IoT-Cloud Integration Across Application Domains", IEEE DESIGN&TEST, IEEE, PISCATAWAY, NJ, USA, vol. 31, no. 3, 1 June 2014 (2014-06-01), pages 21-31, XP011554321, ISSN: 2168-2356, DOI: 10.1109/MDAT.2014.2314602 [retrieved on 2014-07-23]
- MARCO IANSITI ET AL: "The Truth About Blockchain", HARVARD BUSINESS REVIEW., 1 January 2017 (2017-01-01), page 1, XP055393354, US ISSN: 0017-8012

## Description

### Field of Invention

The field of the invention relates to a data exchange system, data exchange method and a gateway module. Particular embodiments relate more specifically, but not exclusively, to systems, methods and gateway modules for exchanging data between a data containing device and a server.

### Background

This section introduces aspects that may be helpful to facilitating a better understanding of the inventions. Accordingly, the statements of this section are to be read in this light and are not to be understood as admissions about what is in the prior art or what is not in the prior art.

The Internet of Things (IoT) is generally understood to describe a system of interrelated computing devices, mechanical and digital machines and objects which are provided with unique identifiers. In general, these IoT devices have the ability to exchange data over a network without requiring human-to-human or human-to-computer interaction.

Low power IoT devices, e.g. battery powered IoT devices, are typically connected to one bridging device or one protocol terminating device which functions as a gateway. For example, a smart watch may be connected to a smartphone or tablet functioning as a gateway via a wireless connection, such as Bluetooth Low Energy (BLE). A smart phone application then makes the connection with the smart watch to pull out the data which is needed by the application and sends the data to a corresponding internet service or parses the data itself.

However, there is no alternative, secure ad-hoc networking solution to connect the smart watch to another device than through the smart phone to which it is linked to.

As an addition to the IoT, Low Power Wide Area Networks (LPWAN) extend the reach of IoT to remotely located objects. Such networks enable wireless transmission of sensor data over relatively large distances (e.g. thousands of metres), at a relatively low bitrate (e.g. a few kbps), and at a very low power level (e.g. a few milliwatts), in order to limit sensor battery power consumption. Various LPWAN technologies have been proposed, both in licensed and unlicensed spectrum bands. Some of the unlicensed LPWAN technologies operate in the sub-GHz spectrum, which is favourable for crossing large distances and for good penetration through walls, while allowing very low power consumption.

LoRa®/LoRaWAN™ is one of the main LPWAN technologies, driven by a large community, by a strong market momentum, and by the ability to combine low cost with long reach and low power. LoRaWAN™ is the MAC (Media Access Control) layer used on top of the LoRa® physical layer. LoRa® is a proprietary modulation format. Particular LoRa® chips use a modulation technique called chirp spread spectrum (CSS) to make up the physical (PHY) layer of the technology stack. LoRaWAN™ is an open-standard that defines the communication protocol for LPWAN technology based on a LoRa® chip. LoRaWAN™ defines the MAC in the data link layer and is maintained by the LoRa Alliance™. In the present specification, the term "LPWAN" may be construed as "any type of low power wide area network technology, including but not limited to LoRa®/LoRaWAN™".

The paper titled "Middelware for IoT-Cloud Integration Across Application Domains" in the name of Huo Chengjia et al, published by IEEE Design & Test, Piscataway, NJ, USA, vol. 31, no 3, on 1 June 2014 describes the need for middleware for IoT-cloud integration. More in particular, a plug-in structure as part of the proposed rimware on the gateway device is suggested in combination with rimware on the cloud side to capture a device's capabilities by mapping between the device profiles and web API.

US 8,653,965 discloses a monitoring system which is able to collect, via a monitor, personal health data, store the personal health data in memory, and transmit at least one data packers comprising the personal health data along with at least one identifier for identifying the monitor. The system further comprises a gateway computing device which is communicatively couples to the monitor and to a network and which transmits the at least one data packet over the network. In addition, the system comprises a server computing device which is communicatively coupled to the network and which receives from the gateway computing device the data packet and stores the data packet in memory associated with a user identifier.

### Summary

An object of embodiments is to provide an exchange system, method and gateway module which allow for an ad-hoc and secure connection between a data carrying device and a server. More in particular, an object of various embodiments is to provide in the retrieval of data from an IoT device, without needing a user to perform an installation or pairing process to link the IoT device with a gateway device.

According to a first aspect there is provided a data exchange system for exchanging data between a data containing device and a server. The data exchange system comprises a device detecting unit configured to detect the device and to obtain from the device a corresponding device identifier; an authentication database configured to store therein a mapping from the device identifier to at least one data type, and to store for each data type of the at least one data type in the authentication database a corresponding data destination, wherein the at least one data type is representative for the type of data that is stored on the device and the data destination is representative for a destination server to which the corresponding data type is to be sent. The data exchange system further comprises an authentication obtaining unit configured to obtain from the authentication database the at least one data type and corresponding data destination based on the obtained device identifier; a data obtaining unit configured to obtain the data from the device based on the obtained data type; and a data sending unit configured to direct the obtained data to the corresponding destination server based on the obtained data destination.

Embodiments are based *inter alia* on the insight that the cooperation between the device detecting unit and the authentication obtaining unit allows for the device to be detected and information related to data on the device to be accessed in a trusted manner. The information related to the data on the device is stored in the authentication database and can be accessed based on the device identifier of the detected device. The information related to the data on the device comprises information on the type of data contained on the device and information on the data destination of each particular type of data. In other words, based on the device identifier, and without the interference of a user, the data exchange system detects the data containing device and gains an insight on the data that is on the device and the destination of the data on the device, in a trusted way. After consulting the authentication database, the data type information can be used to actually retrieve the data from the device, again in a trusted way, and the obtained information on the data destination can be used to send the data to a corresponding destination server. In other words, the data exchange system allows for detecting a device when the device is within range of the device detecting unit, and for retrieving and processing the data from the device in an authenticated manner, without the intervention of a user being needed. Moreover, the data exchange system allows for data to be retrieved from the device and processed without the need for actively coupling or linking the device with a smartphone or other gateway device. In addition, when different data types are present on the device, the data exchange system allows for the different data types to be retrieved and send to their respective data destinations based on the information stored in the authentication database. In other words, the data exchange system allows for the data on one device to be split-up and to be send to one or more corresponding data destinations or internet services in an authenticated manner.

According to an embodiment, the authentication database is configured to store for each data type of the at least one data type in the authentication database corresponding data rules. The authentication obtaining unit is configured to obtain from the authentication database for each data type the corresponding data rules based on the device identifier. The data obtaining unit is configured to obtain the data from the device based on the obtained data rules.

The data rules define allowed and/or forbidden interactions that may or may not be performed on the respective data type. In other words, the data rules may introduce an additional safety net and/or security check to guarantee that data on the device is retrieved and/or processed in a secure and trusted manner.

According to another embodiment the authentication database comprises a remotely accessible distributed database.

In this manner, the authentication database can be accessed from any location by an internet capable authentication obtaining unit or gateway module. In other words, the availability and reliability of the authentication database is increased.

According to a preferred embodiment, the authentication database comprises a blockchain, and the authentication obtaining unit is configured for obtaining any one of data type, data destination and data rules by querying a smart contract with the device identifier.

By implementing a blockchain, the authentication database does not have a central point of potential failure and is better able to withstand eventual malicious attacks. Moreover, changes and/or updates to blockchains are publicly viewable by all parties involved, thereby creating transparency, and providing that all transactions are immutable, meaning they cannot be altered or deleted. By using the blockchain in combination with one or more smart contracts, users can be sure that transactions, data retrievals, and data processing will be executed exactly as commanded by the blockchain and/or smart contract, which alleviates the need for a trusted third party and/or separate contractual clauses.

The use of a smart contract facilitates, verifies, and/or enforces the negotiation and/or performance of a contract, thereby making a contractual clause unnecessary. Smart contracts can also have a user interface which allows them to be modified according to specific needs of a user.

According to another possible embodiment, the device identifier is at least one of a MAC address, Bluetooth ID, certificate and a 64 bit end-device identifier.

In this manner, the device can be uniquely determined, and information related to data on the device can be stored in the authentication database, based on the unique identifier. For every device, and so for every unique identifier, various data types may be stored in the authentication database, along with information on corresponding data destination and data rules, e.g. security rules and/or privacy rules.

According to a further developed embodiment, the device is at least one of a low powered internet of things device, low powered network node or Wi-Fi node.

Low powered devices allow batteries and hence the devices to last longer, avoiding the cost and inconvenience of replacing either the devices or their batteries.

According to an embodiment, the device detecting unit is configured to detect the device and to obtain the device identifier via a wireless connection.

Preferably, the wireless connection is established via by means of a local communication technology such as Bluetooth, Bluetooth Low Energy, Wi-Fi, Zigbee, X10, Z-Wave, KNX, 802.11x Wi-Fi, Thread, Cellular, NFC, Low Power Radio (LPR), etc.

According to another aspect, there is provided a gateway module for obtaining data from a data containing device and sending the obtained data to a destination server based on information stored in a distributed authentication database. The gateway module comprises a device detecting unit configured to detect the device and to obtain from the device a corresponding device identifier; and an authentication obtaining unit configured to obtain from the authentication database at least a data type and corresponding data destination based on the obtained device identifier. The gateway module further comprises a data obtaining unit configured to obtain the data from the device based on the obtained data type; and a data sending unit configured to direct the obtained data to the corresponding destination server based on the obtained data destination.

In an embodiment, the gateway module is located remotely from the data containing device.

In a further embodiment, the gateway module is located within the data containing device.

It will be understood by the skilled person that the features and advantages disclosed hereinabove with respect to various embodiments of the data exchange system may also apply, *mutatis mutandis*, to various embodiments of the gateway module.

According to another aspect, there is provided a data exchange method for exchanging data between a data containing device and at least one server. The data exchange method comprises the steps of detecting the device and obtaining from the device a corresponding device identifier; and storing in an authentication database a mapping from the device identifier to at least one data type, and storing for each data type of the at least one data type in the authentication database a corresponding data destination, wherein the at least one data type is representative for the type of data that is stored on the device and the data destination is representative for a destination server to which the corresponding data type is to be sent. The data exchange method further comprises the steps of obtaining from the authentication database the at least one data type and corresponding data destination based on the obtained device identifier; obtaining the data from the device based on the obtained data type; and directing the obtained data to the corresponding destination server based on the obtained data destination.

According to an embodiment, the data exchange method according comprises storing for each data type of the at least one data type in the authentication database corresponding data rules; obtaining from the authentication database for each data type the corresponding data rules based on the device identifier. Obtaining the data from the device is further based on the obtained data rules.

According to another embodiment, the authentication database comprises a distributed database.

According to a preferred embodiment the authentication database comprises a blockchain, wherein obtaining any one of data type, data destination and data rules comprises querying a smart contract with the device identifier.

By implementing the authentication database as a blockchain, the authentication database does not have a central point of potential failure and is better able to withstand eventual malicious attacks. Moreover, changes and/or updates to the blockchains are publicly viewable by all parties involved, thereby creating transparency, and providing that all transactions are immutable, meaning they cannot be altered or deleted. By using the blockchain in combination with one or more smart contracts, users can be sure that transactions, data retrievals, and data processing will be executed exactly as commanded by the blockchain and/or smart contract, which alleviates the need for a trusted third party and/or separate contractual clauses.

According to another possible embodiment, detecting the device and obtaining the device identifier is performed via a wireless connection.

Preferably, the wireless connection is established via by means of a local communication technology such as Bluetooth, Bluetooth Low Energy, Wi-Fi, Zigbee, X10, Z-Wave, KNX, 802.11x Wi-Fi, Thread, Cellular, NFC, Low Power Radio (LPR), etc.

It will be understood by the skilled person that the features and advantages disclosed hereinabove with respect to various embodiments of the data exchange system and various embodiments of the gateway module may also apply, *mutatis mutandis*, to various embodiments of the data exchange method.

According to a further aspect, there is provided a gateway method for obtaining data from a data containing device and sending the obtained data to a destination server based on information stored in a distributed authentication database. The gateway method comprises the steps of detecting the device and obtaining from the device a corresponding device identifier; obtaining from the authentication database at least a data type and corresponding data destination based on the obtained device identifier; obtaining the data from the device based on the obtained data type; and directing the obtained data to the corresponding destination server based on the obtained data destination.

It will be understood by the skilled person that the features and advantages disclosed hereinabove with respect to various embodiments of the data exchange system and various embodiments of the gateway module may also apply, *mutatis mutandis,* to various embodiments of the gateway method.

According to yet another aspect, there is provided a data exchange system for exchanging data between a data containing device and at least one server, the data exchange system comprising a processor and a memory operably coupled to the processor and including instructions that when executed configure the processor to: receive from the device a corresponding device identifier; implement an authentication database configured to: store therein a mapping from the device identifier to at least one data type, and store for each data type of the at least one data type in the authentication database a corresponding data destination; wherein the at least one data type indicates a type of data that is stored on the device and the data destination indicates a destination server to which the corresponding data type is to be sent; receive from the authentication database the at least one data type and corresponding data destination based on the device identifier; receive the data from the device based on the obtained data type; and direct the obtained data to the corresponding destination server based on the obtained data destination.

According to yet another aspect, there is provided a gateway module for obtaining data from a data containing device and directing the obtained data to a destination server based on information stored in a distributed authentication database, the data gateway module comprising a processor and a memory operably coupled to the processor and including instructions that when executed configure the processor to: receive from the device a corresponding device identifier; receive from the authentication database at least one data type and corresponding data destination based on the device identifier, wherein the at least one data type indicates a type of data that is stored on the device and the data destination indicates a destination server to which the corresponding data type is to be sent; receive the data from the device based on the obtained data type; and direct the obtained data to the corresponding destination server based on the obtained data destination.

According to yet another aspect there is provided a computer program product comprising a computer-executable program of instructions for performing, when executed on a computer, the steps of the method of any one of the method embodiments described above.

According to yet another aspect there is provided a digital storage medium encoding a computer-executable program of instructions to perform, when executed on a computer, the steps of the method of any one of the method embodiments described above.

According to yet another aspect there is provided a device programmed to perform a method comprising the steps of any one of the methods of the method embodiments described above. According to yet another aspect there is provided a method for downloading to a digital storage medium a computer-executable program of instructions to perform, when executed on a computer, the steps of the method of any one of the method embodiments described above.

Further aspects are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting example embodiments of devices. The above and other advantages of the features and objects of various embodiments will become more apparent and the disclosure will be better understood from the following detailed description when read in conjunction with the accompanying drawings, in which:
Figure 1 schematically illustrates an embodiment of a data exchange system;
Figure 2 is a flowchart illustrating an embodiment of a data exchange method;
Figure 3 schematically illustrates a further embodiment of a data exchange system, wherein the data exchange system comprises a gateway module according to the invention and a distributed authentication database; and
Figure 4 schematically illustrates another embodiment of a data exchange system, applied to LPWAN.

### Description of embodiments

Some embodiments can be used to enable exchange of data between a low-power IoT device and a termination point via an ad hoc connection. Such embodiments may use blockchains to implement smart contracts to determine an internet service to which the data coming from the IoT device is to be directed, and/or to determine data to be obtained from the IoT device by the termination point. Such smart contracts may include security policy rules that determine treatment by the termination point of the data stored by the IoT device, e.g. read only or read and write.

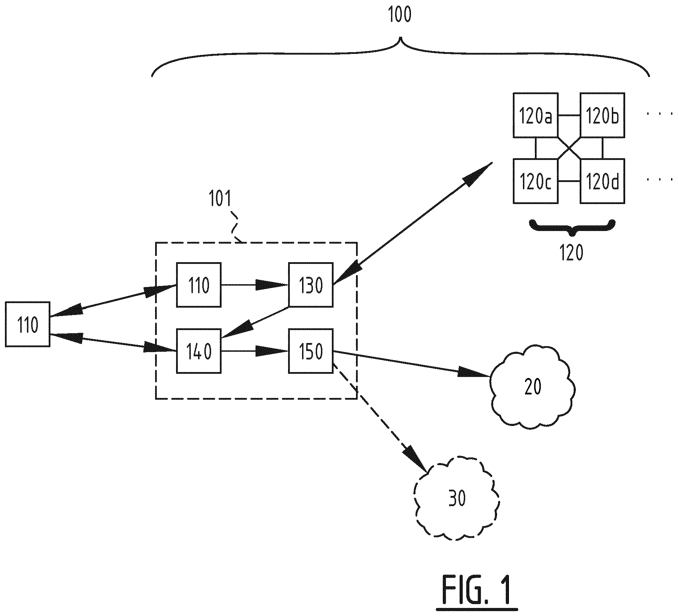

Figure 1 illustrates a data exchange system 100 for exchanging data between a data containing device 10 and at least one server 20, 30. The data exchange system 100 comprises a device detecting unit 110 configured to detect the device 10 and to obtain from the device 10 a corresponding device identifier. The device identifier (device ID) can be the MAC address of the device 10, a Bluetooth ID of the device 10, a certificate of the device 10 when the device is an IoT device, such as a smart watch, or a 64 bit end device identifier if the device 10 is a LoRaWAN node. The exact configuration of the device detecting unit 110 depends on which wireless communication protocol is used to detect and/or connect to the data containing device 10. If the data containing device 10 is a Bluetooth device, it will broadcast its presence when a detection and/or connection is to be setup, and will not broadcast any more until the connection is broken. When the communication between the data containing device 10 and the exchange system 100 and/or gateway module 101 is to be established via X10 protocol, the detecting unit 110 may be configured to detect the device 10 when the device 10 announces itself on a message bus. It is clear to the skilled person that Bluetooth and X10 are merely examples of wireless communication protocols that may be used, and that other protocols may be used alternatively or in additions. Moreover, it is clear to the skilled person how the device detecting unit 110 is configured to detect the device 10 depending on the protocol to be used.

The data exchange system 100 further comprises an authentication database 120 configured to store therein a mapping from the device identifier to at least one data type. In addition to the at least one data type, the database 120 also contains for each data type in the authentication database a corresponding data destination 20. The data type is representative for the type of data that is stored on the device. As an example, when the device 10 is a smart watch 10 with heart beat monitor, the smart watch 10 may contain a first data type of "heart beat data" which needs to be sent to a fitness application to monitor a health state of a user of the smartwatch, and a second data type of "battery life data" which needs to be sent to a maintenance server of the manufacturer of the smart watch 10 to monitor the performance of the battery and/or smartwatch. In such a case the fitness application corresponds with a first data destination for the first data type, and the maintenance server corresponds with a second data destination for the second data type. In the following, the wording "data destination 20" may be used to refer to an actual a server, internet service, operator or the like, or may be used to refer to an identifier of, or a pointer to a server, internet service, operator or the like. Without loss of generality the reference number 20 will be used to refer to the actual server, internet service and operator, or the corresponding identifier/pointer thereof. In the described example, following table may be stored in the authentication database 120:

| Device Identifier | Data Type | Data Destination |
|---|---|---|
| Smart watch 10 | Heart beat data | Fitness application |
| Smart watch 10 | Battery life data | Maintenance server |

For the sake of simplicity, in the above table the device identifier is denoted without implied limitation as "Smart watch 10", it is however clear that the device identifier of a device 10 may be any one of a MAC address of the device 10, a Bluetooth ID of the device 10, a certificate of the device 10, or any other suitable identifier that uniquely identifies the device 10. In a similar way, the data destination can be any identifier of the destination server, destination application or destination internet service, such as an IP address. In addition to the data type and data destination as described above, the authentication database 120 may include further data rules corresponding with respective data types. These data rules may comprise security rules and/or privacy rules.

Examples of additional data rules that can be stored in the authentication database are attributes such as open, close, readOnly, writeOnly, readAndWrite, etc. The data rules may also comprise more complicated rules and can for example relate to a certain data type being accessible at certain time slots, at certain locations, etc. Example data rules may include setting a particular data type to readOnly at a particular time slot, e.g. 8:00 a.m. -10:00 a.m., or setting a particular data type to readAndWrite at a defined home location between 8:00 a.m. -10:00 a.m. and to readOnly at a defined work location between , 10:00 a.m. and 4:00 p.m.

The authentication database 120 may be configured as a remotely accessible distributed database. More in particular, the authentication database may comprise a blockchain or a distributed ledger. In the following, the authentication database 120 may be referred to as a blockchain 120 or distributed ledger 120 without any loss of generality. The authentication database 120 may then be accessed and information may be obtained therefrom by the authentication obtaining unit by querying a smart contract with the obtained device identifier. The smart contract may be implemented as a set of processor-readable instructions ("code") that is initialized and deployed into the authentication database 120 and/or blockchain. This way the smart contract may be executed from within the authentication database 120 and/or blockchain 120. When the smart contract is executed from within the blockchain, the blockchain may expose the smart contract by means of an application programming interface (API). The wording "smart contract" refers to any form of contract which is capable of executing or enforcing itself. The programming code of the smart contract may define strict rules and consequence in a similar way as compared to a traditional legal contract. In addition to a traditional legal contract, a smart contract may take information as an input and process that information accordingly through the rules as defined in the smart contract to take any required action as a result. The rules that are defined by the smart contract can correspond with the data rules, such as security and/or privacy rules, which will be further described below, and/or may correspond with the data destination as stored in the authentication database 120. It is clear to the skilled person that certain entries pertaining to a particular datatype in the authentication database 120 or blockchain may be predetermined or stored in advance by, for example, a manufacturer of the device 10, and that other entries and/or datatypes may be added and/or changed by the user of the device 10. In addition, the manufacturer may set up the outlines of a smart contract, which can be managed and/or updated by the user to correspond with his or her personal preferences.

The data exchange system 100 further comprises an authentication obtaining unit 130 configured for obtaining from the authentication database 120 the data type, corresponding data destination and, if applicable, corresponding data rules by checking for entries in the database 120 that correspond with the obtained device identifier. Communication between the authentication database 120 and the authentication obtaining unit 130 may be established by means of a network connection or internet connection.

The data exchange system 100 further comprises a data obtaining unit 140 configured to obtain the respective data from the device based on the obtained data type and/or data rules, and a data sending unit 150 configured to send or direct the obtained data to the corresponding destination server based on the obtained data destination. Communication between the device 10, e.g. a low power IoT device, and the data obtaining unit 140 of the data exchange system 100 may be established by means of a communication technology such as Bluetooth, Bluetooth Low Energy, Wi-Fi, Zigbee, X10, Z-Wave, KNX, 802.11x Wi-Fi, Thread, Cellular, NFC, Low Power Radio (LPR), etc. Communication between the data sending unit 150 and the data destination 20, 30 may be established by means of a network connection or internet connection.

The device detection unit 110, authentication obtaining unit 130, data obtaining unit 140 and data sending unit 150 as described above may be provided through the use of dedicated hardware as well as hardware capable of executing software in association with appropriate software. The described units may be provided with a single dedicated processor, a single shared processor, or by a plurality of individual processors, some of which may be shared. The units 110, 130, 140 and 150 may further include a memory or memories operably coupled to the processor(s) and including instructions that when executed configure the processor(s) to execute the described functions. It is clear to the skilled person that the device detection unit 110 and data obtaining unit 140 may be provided with a suitable network interface controller which allows the units 110 and 140 to communicate with the device 10 via a mutual communication protocol, and that the authentication obtaining unit 130 and data sending unit 150 may be provided with a suitable network interface controller which allows the units 130 and 140 to communicate with the authentication database 120 and the server(s) 20, 30, respectively, via a mutual communication protocol.

According to an embodiment, the device detection unit 110, authentication obtaining unit 130, data obtaining unit 140 and data sending unit 150 are located remotely from each other throughout the data exchange system.

According to a preferred embodiment, as illustrated in figure 1 with a dotted line, the device detection unit 110, authentication obtaining unit 130, data obtaining unit 140 and data sending unit 150 are provided in one device, more in particular in a gateway module 101, which is illustrated as part of the data exchange system 100. The gateway module 101 may comprise the device detection unit 110, authentication obtaining unit 130, data obtaining unit 140 and data sending unit 150 as described above. The gateway module 101 is configured, on the one hand, to communicate with the device 10 and, on the other hand, to communicate with the authentication database 120. Although the gateway module 101 is illustrated as being located remotely from the device 10, the gateway module 101 may be comprised within the device 10 according to an embodiment.

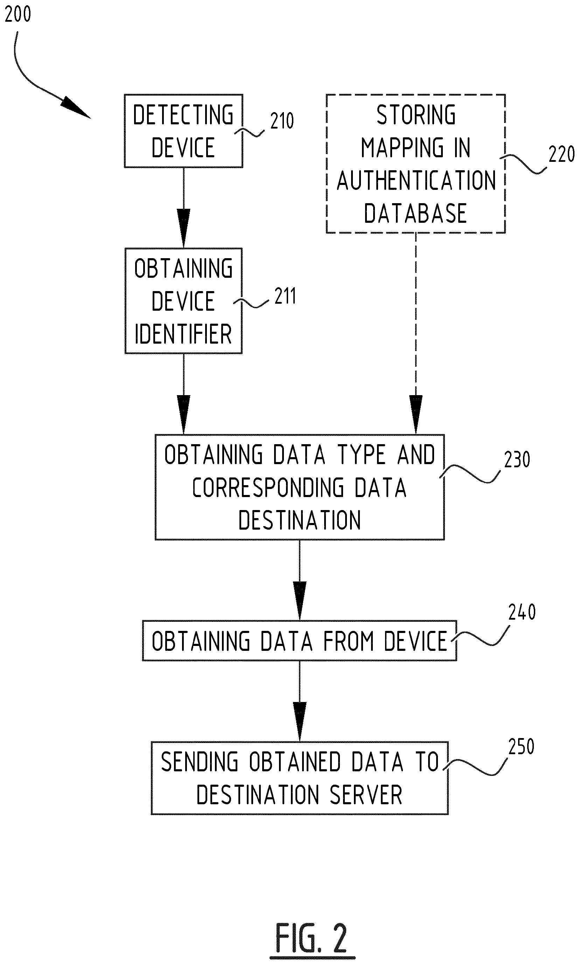

Figure 2 illustrates a data exchange method 200 for exchanging data between a data containing device and at least one server. The data exchange method 200 comprises a step 210 of detecting the device, step 211 of obtaining from the device a corresponding device identifier, and a step 220, indicated in dotted lines, of storing in an authentication database a mapping between the device identifier and at least one data type. Along with storing the mapping or link between the device identifier and a data type, also for each data type of the at least one data type in the authentication database a corresponding data destination is stored. The data exchange method 200 further comprises step 230 of obtaining from the authentication database the at least one data type and corresponding data destination based on the obtained device identifier, a step 240 of obtaining the data from the device based on the obtained data type, and step 250 of sending and/or directing the obtained data to the corresponding destination server based on the obtained data destination. Figure 2 further illustrates a gateway method for obtaining data from a data containing device and sending the obtained data to a destination server based on information stored in a distributed authentication database. The gateway method is similar to the above described data exchange method, with the difference that step 220, which is indicated with dotted lines in figure 2, is not part of the gateway method.

It will be understood by the skilled person that the features and advantages disclosed hereinabove with respect to the data exchange system 100 and gateway module 101 of figure 1 may also apply, *mutatis mutandis*, to various embodiments of the data exchange method 200 and gateway method of figure 2.

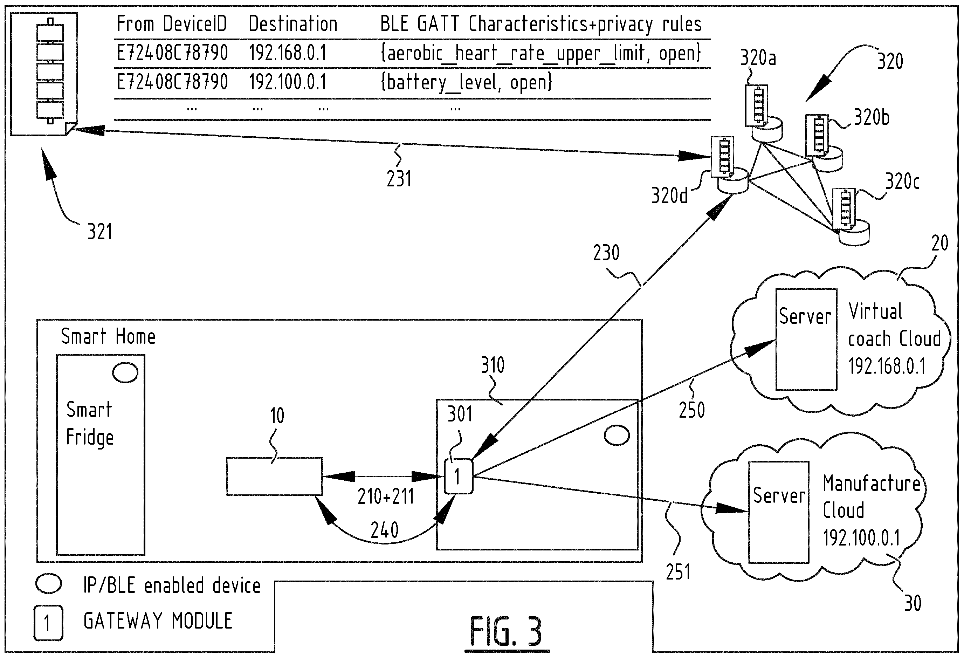

Figure 3 illustrates a further embodiment of a data exchange system, wherein the data exchange system comprises a gateway module 301 according to the invention and a distributed authentication database 320. In the embodiment of figure 3, the authentication database 320 is illustrated by four interconnected distributed peers 320a, 320b, 320c and 320d which may form a blockchain or distributed ledger 321. The distributed authentication database 320 may be referred to herein as a blockchain 320 without any loss of generality.

In the embodiment of figure 3, the assumption is made that a smart house is enabled with several smart devices in each room. For example, a "smart kitchen" is equipped with a smart fridge and a smart coffee machine 310, wherein both the smart fridge and smart coffee machine 310 are connected to the internet, either wirelessly or by other means. The smart coffee machine 310 comprises a gateway 301 module according to various embodiments, and may also be a Bluetooth Smart Ready device. Those skilled in the art will appreciate that "Bluetooth Smart" may refer to a class of Bluetooth devices intended to provide considerably reduced power consumption and cost while maintaining a similar communication range. Further, "Bluetooth Smart Ready" may refer to a dual-mode device compatible with both "classic" (i.e. not low energy) and low energy peripherals. It is clear to the skilled person that there can be a plurality of such devices in the Smart home. The gateway module 301 of the Bluetooth Smart Ready coffee machine 310 is configured to discover BLE devices, such as the BLE enabled IoT device 10, e.g. a smart watch. An example of a chipset which combines WiFi and smart Bluetooth functionality is the Intel Edison (Intel Corporation, Santa Clara, CA, USA). The gateway module 301 can also query the blockchain 320 and/or ledger 321, via de plurality of distributed peers 320a, 320b, 320c, 320d.

In an example, the device 10 is a smart watch that is Bluetooth Smart enabled. For the purpose of this example is referred to as a smart watch 10. A person wearing the smart watch 10 enters the kitchen after a workout that is logged by the smart watch 10. The gateway module 301 on the coffee machine 310 discovers the smart watch 10 in step 210 and obtains the device identifier of the smart watch 10 in step 211. The gateway module 301 then sends a query request to a smart contract in the blockchain 320, 321 in step 230 to determine which data or data type needs to be obtained from the smart watch 10, and to what destination the data is to be directed considering the privacy and security policy (data rules) for that data destination and/or data type. The query includes a key, e.g. the identity of the smart watch 10, e.g. a datum that identifies the smart watch 10. In other words, by presenting the device identifier, the information in the authentication database 320 or blockchain 320 can be accessed. The device identifier which functions as a key to the authentication database 320 or blockchain 320 may be a MAC address or any other identifier to uniquely identify the device 10 such as a universally unique identifier (UUID). In further embodiments, to access the authentication database 320, the key may comprise a cryptographic hash function (HASH) which can take multiple inputs, e.g. MAC address, serial number, etc. from the smart watch 10 to create a unique identifier in order to access the authentication database 320. In alternative embodiments, the key to access the authentication database 320 may comprise an encryption key. In the illustrated embodiment, it is assumed that the MAC address of the smart watch 10 functions as the identity. In response to the query the gateway module 301 obtains in step 230 two data destinations, e.g. 192.168.0.1 and 192.100.0.1 corresponding to two different data types, respectively e.g. "heart rate limit" and "battery level". For the purpose of this example, 192.168.0.1 is the address of the server 20, which is maintained by the manufacturer of the smart watch 10. Further in this example, 192.100.0.1 is the address of the server 30, which is part of a virtual athletic coach application in the cloud. The gateway module 301 also obtains the data rules corresponding to these data types, which in this case have the value "open". The gateway module 301 then queries the smart watch 10 for the heart rate limit and battery level data in step 240 and forwards the retrieved data to the corresponding servers 20 and 30 in steps 250 and 251, respectively.

In a further embodiment, the user may perform the workout together with a companion who also carries a BLE smart watch and who does not live in the particular smart home as illustrated in figure 3. Nevertheless, when the companion enters the smart kitchen, his or her smart watch is discovered by the gateway module 301 on the coffee machine 310. The gateway module 301 will query a smart contract in the blockchain 320, 321 to determine which data needs to be sent where and what the security and/or privacy policy is for the particular data on the companion's smart watch. When the policy is "open", the data will be queried from the companion's smart watch and consequently sent to the destination(s) as defined in or determined by the smart contract. If the policy is "closed" for that data, nothing is uploaded and no connection is made to query or retrieve that actual data from the smart watch.

The information needed, e.g. data type, data destination, credentials, data rules, for sending the data to the respected internet services can also be stored into a smart contract in the blockchain.

The security and privacy rules are also stored into the blockchain for each data point or data type such as battery level and heart rate limit.

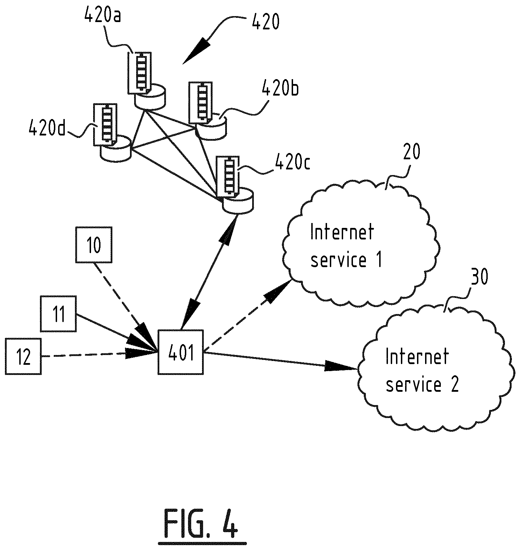

Figure 4 illustrates another embodiment, e.g. a data exchange system, applied to LPWAN. This embodiment illustrates the principle that the data exchange system described herein can also be used with regard to other type of networks where gateways are used to bridge between the internet and a low power network, such as a LoRaWAN network. In this embodiment a LoRaWAN network includes a multi-operator gateway module 401. The gateway module 401 routes data coming from one or more devices or nodes 10, 11, 12 to different operators or internet services 20, 30 by querying the blockchain 420 to retrieve the destination and credentials depending on the node identifier, e.g. DevEUI. The processes of detecting the nodes 10, 11, 12, obtaining from the nodes 10, 11, 12 respective node identifiers, and querying an authentication database 420 or blockchain 420 are similar to the corresponding processes as described in connection with the previous figures. In the embodiment of figure 4, the blockchain or distributed ledger is illustrated as being hosted on four distributed peers 420a, 420b, 420c and 420d. However, it is clear to the skilled person that the authentication database 420 may be hosted by any amount of servers or peers.

In the embodiment of figure 4, the data exchange system is applied to a LoRaWAN network with three nodes 10, 11, 12 and one LoRaWAN gateway module 401 with two different LoRaWAN operators 20, 30, which are represented by Internet service 1 and Internet service 2. The gateway module 401 contains an authentication obtaining unit (not shown) that queries the blockchain 420 to check the destination to which the data of the particular nodes 10, 11, 12 needs to be forwarded. Depending on the node, data may need to be forwarded to a first data destination 20 represented by Internet service 1 or a second data destination 30 represented by Internet service 2. In some embodiments the identification of the node for LoraWAN networks is determined by the DevEUI (64 bit end-device identifier, EUI-64 (unique)).

The described embodiments of the invention enable a secure and seamless ad-hoc connection setup to an internet service from any location for low power IoT devices. In other words, the connection setup and data exchange between the IoT device and a particular cloud service is not dependent on the presence the smartphone of the user. Embodiments can be applied to a number of low power IoT networks, e.g. via BLE, LoraWAN, etc. Furthermore, embodiments allow for data traffic originated from IoT devices to be split, e.g. different data types can be sent to different corresponding data destinations.

Thus, referring without implied limitation to situations that include a fitness tracker, embodiments alleviate the need for an end user to open the smartphone application to retrieve data from the fitness tracker each time he or she finishes a workout. Embodiments allow seamless data transfer once the fitness tracker is within range of a suitably configured device, e.g. a Bluetooth Smart Ready device, that is provided with a gateway module according to various described embodiments.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention(s). It will thus be appreciated that those skilled in the art will be able to devise various arrangements that, although not explicitly described or shown herein, embody such principles and are included within its scope. Furthermore, all examples recited herein are principally intended expressly to be only for pedagogical purposes to aid the reader in understanding such principles and the concepts contributed by the inventor(s) to furthering the art, and are to be construed as being without limitation to such specifically recited examples and conditions.

The functions of the various elements shown in the figures, including any functional blocks labelled as "units", "processors" or "modules" may be provided through the use of dedicated hardware as well as hardware capable of executing software in association with appropriate software. When provided by a processor, the functional blocks may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention(s). Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention(s) and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. Various embodiments can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the description, expressions such as "comprise", "include", "have", "may comprise", "may include", or "may have" indicate existence of corresponding features but do not exclude existence of additional features.

Whilst the principles of the present invention(s) have been set out above in connection with specific embodiments, it is to be understood that this description is merely made by way of example and not as a limitation of the scope of protection which is determined by the appended claims.

## Claims

1. A data exchange system (100) for exchanging data between a data containing device and at least one server, the data exchange system comprising:
a device detecting unit (110) configured to detect the device and obtain from the device a corresponding device identifier;
an authentication database (120) configured to store therein a mapping between the device identifier and at least one data type, and to store for each data type of the at least one data type a corresponding data destination, wherein the at least one data type is representative of the type of data that is stored on the device and the data destination is representative of a destination server to which the corresponding data type is to be sent;
an authentication obtaining unit (130) configured to obtain from the authentication database (120) the at least one data type and corresponding data destination based on the obtained device identifier;
a data obtaining unit (140) configured to obtain the data from the device based on the obtained data type; and
a data sending unit (150) configured to direct the data to the corresponding destination server based on the obtained data destination.

2. Data exchange system (100) according to claim 1, wherein
the authentication database (120) is configured to store for each data type of the at least one data type in the authentication database (120) corresponding data rules;
the authentication obtaining unit (130) is configured to obtain from the authentication database for each data type the corresponding data rules based on the device identifier; and
the data obtaining unit (140) is configured to obtain the data from the device based on the obtained data rules.

3. Data exchange system (100) according to claim 1 or 2, wherein the authentication database (120) comprises a remotely accessible distributed database.

4. Data exchange system (100) according to any one of the preceding claims, wherein the authentication database (120) comprises a blockchain, and wherein the authentication obtaining unit (130) is configured to obtain any one of data type, data destination and data rules by querying a smart contract with the device identifier.

5. Data exchange system (100) according to any one of the preceding claims, wherein the device identifier is at least one of a MAC address, Bluetooth ID, certificate and a 64 bit end-device identifier.

6. Data exchange system (100) according to any one of the preceding claims, wherein the device is at least one of a low powered internet of things device, low powered network node or Wi-Fi node.

7. Data exchange system (100) according to any one of the preceding claims wherein the device detecting unit (110) is configured to detect the device and obtain the device identifier via a wireless connection.

8. A gateway module (101) for obtaining data from a data containing device and sending the obtained data to a destination server based on information stored in a distributed authentication database (120), the gateway module comprising:
a device detecting unit (110) configured to detect the device and obtain from the device a corresponding device identifier;
an authentication obtaining unit (130) configured to obtain from the authentication database (120) at least a data type and corresponding data destination based on the obtained device identifier;
a data obtaining unit (140) configured to obtain the data from the device based on the obtained data type; and
a data sending unit (150) configured to direct the obtained data to the corresponding destination server based on the obtained data destination.

9. A data exchange method (200) for exchanging data between a data containing device and at least one server, the data exchange method comprising:
detecting (210) the device and obtaining from the device a corresponding device identifier;
storing (220) in an authentication database (120) a mapping from the device identifier to at least one data type, and storing for each data type of the at least one data type in the authentication database a corresponding data destination, wherein the at least one data type is representative for the type of data that is stored on the device and the data destination is representative for a destination server to which the corresponding data type is to be sent;
obtaining (230) from the authentication database (120) the at least one data type and corresponding data destination based on the obtained device identifier;
obtaining (240) the data from the device based on the obtained data type; and
directing (250) the obtained data to the corresponding destination server based on the obtained data destination.

10. Data exchange method (200) according to claim 9, comprising:
storing for each data type of the at least one data type in the authentication database (120) corresponding data rules;
obtaining from the authentication database (120) for each data type the corresponding data rules based on the device identifier; and
wherein obtaining the data from the device is further based on the obtained data rules.

11. Data exchange method (200) according to claim 9 or 10, wherein the authentication database (120) comprises a distributed database.

12. Data exchange method (200) according to any one of the claims 9 to 11, wherein the authentication database (120) comprises a blockchain, wherein obtaining any one of data type, data destination and data rules comprises querying a smart contract with the device identifier.

13. Data exchange method (200) according to any one of the claims 9 to 12, wherein detecting the device and obtaining the device identifier is performed via a wireless connection.

14. A computer program product comprising a computer-executable program of instructions for performing, when executed on a computer, all the steps of the method (200) of any one of claims 9 to 13.

15. A digital storage medium encoding a computer-executable program of instructions to perform, when executed on a computer, all the steps of the method (200) of any one of claims 9 to 13.

## Patentansprüche

1. Datenaustauschsystem (100) zum Austausch von Daten zwischen einer Daten enthaltenden Vorrichtung und mindestens einem Server, wobei das Datenaustauschsystem umfasst:
eine Vorrichtungsdetektionseinheit (110), die dazu ausgelegt ist, die Vorrichtung zu detektieren und von der Vorrichtung eine entsprechende Vorrichtungskennung zu erhalten;
eine Authentifizierungsdatenbank (120), die dazu ausgelegt ist, darin ein Mapping zwischen der Vorrichtungskennung und mindestens einem Datentyp zu speichern und für jeden Datentyp des mindestens einen Datentyps ein entsprechendes Datenziel zu speichern, wobei der mindestens eine Datentyp für den Typ der auf der Vorrichtung gespeicherten Daten repräsentativ ist und das Datenziel für einen Zielserver repräsentativ ist, an den der entsprechende Datentyp zu senden ist;
eine Authentifizierungserhaltungseinheit (130), die dazu ausgelegt ist, aus der Authentifizierungsdatenbank (120) den mindestens einen Datentyp und ein entsprechende Datenziel basierend auf der erhaltenen Vorrichtungskennung zu erhalten;
eine Datenerhaltungseinheit (140), die dazu ausgelegt ist, die Daten von der Vorrichtung basierend auf dem erhaltenen Datentyp zu erhalten; und
eine Datensendeeinheit (150), die dazu ausgelegt ist, die Daten basierend auf dem erhaltenen Datenziel an den entsprechenden Zielserver zu leiten.

2. Datenaustauschsystem (100) nach Anspruch 1, wobei
die Authentifizierungsdatenbank (120) dazu ausgelegt ist, für jeden Datentyp des mindestens einen Datentyps in der Authentifizierungsdatenbank (120) entsprechende Datenregeln zu speichern;
die Authentifizierungserhaltungseinheit (130) dazu ausgelegt ist, aus der Authentifizierungsdatenbank für jeden Datentyp die entsprechenden Datenregeln basierend auf der Vorrichtungskennung zu erhalten; und
die Datenerhaltungseinheit (140) dazu ausgelegt ist, die Daten von der Vorrichtung basierend auf den erhaltenen Datenregeln zu erhalten.

3. Datenaustauschsystem (100) nach Anspruch 1 oder 2, wobei die Authentifizierungsdatenbank (120) eine entfernt zugängliche verteilte Datenbank umfasst.

4. Datenaustauschsystem (100) nach einem der vorhergehenden Ansprüche, wobei die Authentifizierungsdatenbank (120) eine Blockchain umfasst, und wobei die Authentifizierungserhaltungseinheit (130) dazu ausgelegt ist, einen beliebigen Datentyp, ein Datenziel und eine Datenregel durch Abfragen eines "Smart Contract" mit der Vorrichtungskennung zu erhalten.

5. Datenaustauschsystem (100) nach einem der vorhergehenden Ansprüche, wobei die Vorrichtungskennung eine MAC-Adresse und/oder eine Bluetooth-ID und/oder ein Zertifikat und/oder eine 64-Bit-Endvorrichtungskennung ist.

6. Datenaustauschsystem (100) nach einem der vorhergehenden Ansprüche, wobei die Vorrichtung ein Internet der Dinge Vorrichtung mit niedriger Leistung und/oder ein Netzwerkknoten mit niedriger Leistung und/oder ein Wi-Fi-Knoten ist.

7. Datenaustauschsystem (100) nach einem der vorhergehenden Ansprüche, wobei die Vorrichtungsdetektionseinheit (110) dazu ausgelegt ist, die Vorrichtung zu detektieren und die Vorrichtungskennung über eine drahtlose Verbindung zu erhalten.

8. Gateway-Modul (101) zum Erhalten von Daten von einer Daten enthaltenden Vorrichtung und Senden der erhaltenen Daten an einen Zielserver basierend auf Informationen, die in einer verteilten Authentifizierungsdatenbank (120) gespeichert sind, wobei das Gateway-Modul umfasst:
eine Vorrichtungsdetektionseinheit (110), die dazu ausgelegt ist, die Vorrichtung zu detektieren und von der Vorrichtung eine entsprechende Vorrichtungskennung zu erhalten;
eine Authentifizierungserhaltungseinheit (130), die dazu ausgelegt ist, aus der Authentifizierungsdatenbank (120) mindestens einen Datentyp und ein entsprechendes Datenziel basierend auf der erhaltenen Vorrichtungskennung zu erhalten;
eine Datenerhaltungseinheit (140), die dazu ausgelegt ist, die Daten von der Vorrichtung basierend auf dem erhaltenen Datentyp zu erhalten; und
eine Datensendeeinheit (150), die dazu ausgelegt ist, die erhaltenen Daten basierend auf dem erhaltenen Datenziel an den entsprechenden Zielserver zu leiten.

9. Datenaustauschverfahren (200) zum Austausch von Daten zwischen einer Daten enthaltenden Vorrichtung und mindestens einem Server, wobei das Datenaustauschverfahren umfasst:
Detektieren (210) der Vorrichtung und Erhalten einer entsprechenden Vorrichtungskennung von der Vorrichtung;
Speichern (220) eines Mappings von der Vorrichtungskennung auf mindestens einen Datentyp in einer Authentifizierungsdatenbank (120) und Speichern eines entsprechenden Datenziels für jeden Datentyp des mindestens einen Datentyps in der Authentifizierungsdatenbank, wobei der mindestens eine Datentyp für den Typ der Daten, die auf der Vorrichtung gespeichert sind, repräsentativ ist und das Datenziel für einen Zielserver repräsentativ ist, zu dem der entsprechende Datentyp zu senden ist;
Erhalten (230) des mindestens einen Datentyps und des entsprechenden Datenziels von der Authentifizierungsdatenbank (120) basierend auf der erhaltenen Vorrichtungskennung;
Erhalten (240) der Daten von der Vorrichtung basierend auf dem erhaltenen Datentyp; und
Leiten (250) der erhaltenen Daten an den entsprechenden Zielserver basierend auf dem erhaltenen Datenziel.

10. Datenaustauschverfahren (200) nach Anspruch 9, umfassend:
Speichern von entsprechenden Datenregeln für jeden Datentyp des mindestens einen Datentyps in der Authentifizierungsdatenbank (120);
Erhalten der entsprechenden Datenregeln für jeden Datentyp aus der Authentifizierungsdatenbank (120) basierend auf der Vorrichtungskennung; und
wobei das Erhalten der Daten von der Vorrichtung ferner auf den erhaltenen Datenregeln basiert.

11. Datenaustauschverfahren (200) nach Anspruch 9 oder 10, wobei die Authentifizierungsdatenbank (120) eine verteilte Datenbank umfasst.

12. Datenaustauschverfahren (200) nach einem der Ansprüche 9 bis 11, wobei die Authentifizierungsdatenbank (120) eine Blockchain umfasst, wobei das Erhalten eines der Datentypen, Datenziele und Datenregeln das Abfragen eines "Smart Contract" mit der Vorrichtungskennung umfasst.

13. Datenaustauschverfahren (200) nach einem der Ansprüche 9 bis 12, wobei Detektieren der Vorrichtung und Erhalten der Vorrichtungskennung über eine drahtlose Verbindung durchgeführt wird.

14. Computerprogrammprodukt, umfassend ein computerausführbares Programm von Anweisungen zum Durchführen aller Schritte des Verfahrens (200) nach einem der Ansprüche 9 bis 13, wenn es auf einem Computer ausgeführt wird.

15. Digitales Speichermedium, das ein computerausführbares Programm von Anweisungen kodiert, um bei Ausführung auf einem Computer alle Schritte des Verfahrens (200) nach einem der Ansprüche 9 bis 13 durchzuführen.

## Revendications

1. Système d'échange de données (100) pour échanger des données entre un dispositif contenant des données et au moins un serveur, le système d'échange de données comprenant :
une unité de détection de dispositif (110) configurée pour détecter le dispositif et obtenir, à partir du dispositif, un identifiant de dispositif correspondant ;
une base de données d'authentification (120) configurée pour y stocker un mappage entre l'identifiant de dispositif et au moins un type de données, et pour stocker pour chaque type de données de l'au moins un type de données une destination de données correspondante, l'au moins un type de données étant représentatif du type de données qui est stocké sur le dispositif et la destination de données étant représentative d'un serveur de destination auquel le type de données correspondant est destiné à être envoyé ;
une unité d'obtention d'authentification (130) configurée pour obtenir, à partir de la base de données d'authentification (120), l'au moins un type de données et une destination de données correspondante basée sur l'identifiant de dispositif obtenu ;
une unité d'obtention de données (140) configurée pour obtenir les données à partir du dispositif sur la base du type de données obtenu ; et
une unité d'envoi de données (150) configurée pour orienter les données vers le serveur de destination correspondant sur la base de la destination de données obtenue.

2. Système d'échange de données (100) selon la revendication 1, dans lequel
la base de données d'authentification (120) est configurée pour stocker, pour chaque type de données de l'au moins un type de données dans la base de données d'authentification (120), des règles de données correspondantes ;
l'unité d'obtention d'authentification (130) est configurée pour obtenir à partir de la base de données d'authentification pour chaque type de données les règles de données correspondantes sur la base de l'identifiant de dispositif ; et
l'unité d'obtention de données (140) est configurée pour obtenir les données à partir du dispositif sur la base des règles de données obtenues.

3. Système d'échange de données (100) selon la revendication 1 ou 2, dans lequel la base de données d'authentification (120) comprend une base de données distribuée accessible à distance.

4. Système d'échange de données (100) selon l'une quelconque des revendications précédentes, dans lequel la base de données d'authentification (120) comprend une chaîne de blocs, et dans lequel l'unité d'obtention d'authentification (130) est configurée pour obtenir un élément quelconque parmi un type de données, une destination de données et des règles de données en interrogeant un contrat intelligent avec l'identifiant de dispositif.

5. Système d'échange de données (100) selon l'une quelconque des revendications précédentes, dans lequel l'identifiant de dispositif est au moins un élément parmi une adresse MAC, un ID Bluetooth, un certificat et un identifiant de dispositif final à 64 bits.

6. Système d'échange de données (100) selon l'une quelconque des revendications précédentes, dans lequel le dispositif est au moins un élément parmi un dispositif à faible puissance de l'internet des objets, un nœud de réseau à faible puissance ou un nœud Wi-Fi.

7. Système d'échange de données (100) selon l'une quelconque des revendications précédentes, dans lequel l'unité de détection de dispositif (110) est configurée pour détecter le dispositif et obtenir l'identifiant de dispositif via une connexion sans fil.

8. Module passerelle (101) pour obtenir des données à partir d'un dispositif contenant des données et pour envoyer les données obtenues à un serveur de destination sur la base d'informations stockées dans une base de données d'authentification distribuée (120), le module passerelle comprenant :
une unité de détection de dispositif (110) configurée pour détecter le dispositif et obtenir, à partir du dispositif, un identifiant de dispositif correspondant ;
une unité d'obtention d'authentification (130) configurée pour obtenir, à partir de la base de données d'authentification (120), au moins un type de données et une destination de données correspondante basée sur l'identifiant de dispositif obtenu ;
une unité d'obtention de données (140) configurée pour obtenir les données à partir du dispositif sur la base du type de données obtenu ; et
une unité d'envoi de données (150) configurée pour orienter les données obtenues vers le serveur de destination correspondant sur la base de la destination de données obtenue.

9. Procédé d'échange de données (200) pour échanger des données entre un dispositif contenant des données et au moins un serveur, le procédé d'échange de données comprenant :
la détection (210) du dispositif et l'obtention, à partir du dispositif, d'un identifiant de dispositif correspondant ;
le stockage (220) dans une base de données d'authentification (120) d'un mappage depuis un identifiant de dispositif vers au moins un type de données, et le stockage pour chaque type de données de l'au moins un type de données dans la base de données d'authentification d'une destination de données correspondante, l'au moins un type de données étant représentatif pour le type de données qui est stocké sur le dispositif et la destination de données étant représentative pour un serveur de destination auquel le type de données correspondant est destiné à être envoyé ;
l'obtention (230) à partir de la base de données d'authentification (120), de l'au moins un type de données et d'une destination de données correspondante basée sur l'identifiant de dispositif obtenu ;
l'obtention (240) des données à partir du dispositif sur la base du type de données obtenu ; et
l'orientation (250) des données obtenues vers le serveur de destination correspondant sur la base de la destination de données obtenue.

10. Procédé d'échange de données (200) selon la revendication 9, comprenant :
le stockage pour chaque type de données de l'au moins un type de données dans la base de données d'authentification (120) correspondant aux règles de données ;
l'obtention, à partir de la base de données d'authentification (120) pour chaque type de données, des règles de données correspondant sur l'identifiant de dispositif ; et
l'obtention des données à partir du dispositif étant basée en outre sur les règles de données obtenues.

11. Procédé d'échange de données (200) selon la revendication 9 ou 10, dans lequel la base de données d'authentification (120) comprend une base de données distribuée.

12. Procédé d'échange de données (200) selon l'une quelconque des revendications 9 à 11, dans lequel la base de données d'authentification (120) comprend une chaîne de blocs, dans lequel l'obtention d'un élément quelconque parmi un type de données, une destination de données et des règles de données comprend l'interrogation d'un contrat intelligent avec l'identifiant de dispositif.

13. Procédé d'échange de données (200) selon l'une quelconque des revendications 9 à 12, dans lequel la détection du dispositif et l'obtention de l'identifiant de dispositif sont réalisées via une connexion sans fil.

14. Produit à programme informatique comprenant un programme d'instructions exécutable par ordinateur pour réaliser, lorsqu'il est exécuté sur un ordinateur, toutes les étapes du procédé (200) de l'une quelconque des revendications 9 à 13.

15. Support de stockage numérique codant un programme d'instructions exécutable par ordinateur pour réaliser, lorsqu'il est exécuté sur un ordinateur, toutes les étapes du procédé (200) de l'une quelconque des revendications 9 à 13.
